# EUROPEAN PATENT APPLICATION

(11) **EP 2 886 742 A1**
(43) Date of publication of application: **24.06.2015**
(21) Application number: 13199074.9
(22) Date of filing: 20.12.2013
(51) Int. Cl.: E04G 5/12

(54) **On-site mobile facility**

(71) Applicant: SiteCover ApS, 4690 Haslev (DK)
(72) Inventor: Maintz, Jacob, 4690 Haslev (DK); Hansen, Claus, 4180 Sorø (DK)
(74) Representative: Hoffmann Dragsted A/S

(57) **Abstract**

The present invention relates to an on-site mobile facility for shielding when constructing, renovating or assembling a building, a bridge or a wind turbine, the on-site mobile facility covering an area having boundaries and corners, comprising a plurality of modules, each module having a module roof structure, the module roof structures being mounted as a facility roof structure connecting horizontal beams of the module roof structures, the facility roof structure having edges and the horizontal beams defining the edges which are supported by legs, the legs and the beams defining side areas which are covered by a shielding arrangement, the shielding arrangement comprising elongated elements, and cover material, such as tarpaulin, being arranged between the elements and connected therewith, wherein the on-site mobile facility further comprises a guide system slidably connecting the elements with one of the beams or the adjacent legs. The present invention also relates to a facility mounting method for mounting the on-site mobile facility according to the present invention.

## Description

### Field of the invention

The present invention relates to an on-site mobile facility for shielding when constructing, renovating or assembling a building, a bridge or a wind turbine, or when building temporary sports arenas, amusement facilities, or concert venues. The present invention also relates to a facility mounting method for mounting the on-site mobile facility according to the present invention.

### Background art

When renovating buildings or making a metro station below the ground, such constructions are not easily covered during the construction period. Thus, covering facilities have to be very strong to have the required wide, free span and are therefore made to be of a more permanent character in order to be able to bear this wide free span and withstand the wind forces acting on the facility during high winds. Furthermore, in the northern countries, such constructions have to withstand the heavy load from snowfall.

Furthermore, the assembly of such temporary cover or production facility over an existing building or future underground station is also very difficult, as the cranes for lifting the covering structures cannot stand underneath due to the building to be renovated or the fact that there is a hole in the ground where the descent to the station is to be built. Therefore, very large and thus very expensive cranes are required for mounting such cover or production facility. And this adds substantial costs to the process of renovating a building or constructing an underground station.

### Summary of the invention

It is an object of the present invention to wholly or partly overcome the above disadvantages and drawbacks of the prior art. More specifically, it is an object to provide an improved on-site facility which is easier to mount over a large element such as a building, a bridge, a wind turbine or a future rail-way station.

The above objects, together with numerous other objects, advantages, and features, which will become evident from the below description, are accomplished by a solution in accordance with the present invention by an on-site mobile facility for shielding when constructing, renovating or assembling a building, a bridge or a wind turbine, the on-site mobile facility covering an area having boundaries and corners, comprising:
- a plurality of modules, each module having a module roof structure, the module roof structures being mounted as a facility roof structure connecting horizontal beams of the module roof structures, the facility roof structure having edges and the horizontal beams defining the edges which are supported by legs, the legs and the beams defining side areas which are covered by a shielding arrangement, the shielding arrangement comprising elongated elements, and cover material, such as tarpaulin, being arranged between the elements and connected therewith,
wherein the on-site mobile facility further comprises a guide system slidably connecting the elements with one of the beams or the adjacent legs.

By having each side area covered by a separate shielding arrangement, the on-site mobile facility can be designed substantially as a more light-weight construction than known facilities, since the shielding arrangements can quickly by pulled up if the wind forces on the construction become too high. Thus, the facility construction does not have to be capable of withstanding wind pressure on all sides of the facility, as the shielding arrangement can be retracted and the wind allowed to flow underneath the facility. In known facilities, the whole side of the facility is covered by one tarpaulin. Consequently, the side cannot be easily removed, and the design of known facilities has to be stronger and thus more massive. When having a more light-weight design, the facility can be mounted with much smaller cranes, reducing mounting costs substantially. Furthermore, the facility, when built from modules, can be mounted several metres off the ground, e.g. above a building to be renovated or across a larger opening, such as when building a metro station where supporting legs in the middle of the facility is not an option.

By mounting the facility starting with a corner, the facility can be built off the ground, e.g. 30 metres off the ground covering an existing building. Furthermore, the facility can be mounted with smaller cranes, since the whole facility roof structure does not have to be hoisted in one piece. By using a smaller crane, the facility is less costly to mount than known facilities.

The on-site mobile facility as described above may further comprise a guide system slidably connecting the elements with one of the beams or the adjacent legs without any further frame structure there between.

Also, the shielding arrangement may have a shielding position in which the elements have a first mutual distance and an open position in which the elements have a smaller mutual distance than the first mutual distance in the shielding position.

Moreover, the guide system may comprise a motor for bringing the elements from a shielding position to an open position or vice versa.

The on-site mobile facility as described above may further comprise a crane, such as a traverse crane, suspended from the facility roof structure.

Said crane may be used for bringing the elements from a shielding position to an open position or vice versa.

Further, the motor or the crane may be operated by remote control.

In addition, the elements may be slidably connected with the beam or legs by a rail connection.

Also, the elements may have a tongue engaging a groove in the beam or legs.

The cover material may be divided into cover parts, each cover part being arranged between two adjacent elements.

Additionally, the shielding arrangement may have an outer face and an inner face facing an inside of the facility, at least a first cover part of the cover material being connected to the element at the outer face of the shielding arrangement and at least a second cover part of the cover material being connected to the element at the inner face of the shielding arrangement.

Furthermore, a space is formed between the first and second cover parts, which space may be fully or partly filled with sound-absorbing material, sound insulation, and/or layers of material having different properties.

Moreover, the cover material may be connected to grooves in the elements.

Furthermore, at least the element being furthest away from the beam may be connected with a hoist system by a hoisting means, such as a wireline, a cord or a chain, so that this element and the intermediate elements are hoisted by pulling in the hoisting means.

Also, each module may comprise a pyramidal roof structure consisting of joists having a first end and a second end, the first ends being connected to the beams and the second ends being connected to each other in a joist connection.

In addition, the second ends of the joists may be hingedly connected in the joist connection so that the pyramidal roof structure is unfoldable.

A second cover material may be connected with the joist connection and the beams.

Further, the guide system may comprise a wind sensor.

Moreover, projecting flanges structures may be suspended from the facility roof structure and connected with the beams, the projecting flanges or structure defining rails for a crane moving along the rails.

The projecting flange structures may be in the same level of height, so that a crane is capable of travelling across the facility underneath the facility roof structure in a first direction and in a second direction perpendicularly to the first direction.

Additionally, the beams may be connected by corner blocks forming a squared grid structure.

The corner blocks may have a projecting flange structure forming part of the rails of the crane.

The projecting flange structure of the corner blocks may be in the same level of height as the projecting flange structures connected with the beams, so that a crane is capable of travelling across the facility underneath the facility roof structure in a first direction and in a second direction perpendicularly to the first direction.

Furthermore, rails for a crane may be integrated in the beams and the corner blocks so as to form a grid of rails so that the crane can travel in two perpendicular directions across the facility underneath the facility roof structure.

The on-site mobile facility as described above may further comprise grid beams connections connecting the joist connections.

Also, each leg may be fastened to a base structure.

Said base structure may be partly submerged into the ground and covered by ground material.

Furthermore, the base structure may comprise a base plate which is substantially horizontal when arranged in the ground, and at least one first partition arranged perpendicularly to the base plate.

The first partition may be arranged at least partly in the ground.

Moreover, the base structure may further comprise a second partition connected with the base plate and arranged perpendicularly to the first partition and perpendicularly to the base plate.

By having partitions arranged at least partly in the ground, the ground material is divided by the partitions, and when the wind pulls in the facility, the forces acting on the facility are distributed to the base structure and the ground. Consequently, the forces can only move the facility, if the ground material is also moved.

The present invention also relates to a facility mounting method for mounting the on-site mobile facility as described above at a site and covering an area having boundaries and corners, comprising the steps of:
- arranging a plurality of base structure at predetermined locations at the site along the boundaries,
- fastening a leg to each of the base structures being part of one of the corners,
- raising the beams,
- fastening each beam to the legs by means of corner blocks,
- fastening two beams so that a first end of one of the two beams is fastened to one of the legs forming the corner, and a first end of the other of the two beams is fastened to another one of the legs forming the corner, and fastening second ends of the beams to each other by means of a corner block, thereby forming a square frame of beams in the corner,
- fastening a pyramidal roof structure consisting of joists having a first end and a second end, the first ends being connected to the square frame of beams and the second ends of the joists being connected to each other in a joist connection,
- fastening further beams to legs adjacent the corner,
- fastening further beams forming square frames of beams, and
- fastening further pyramidal roof structures to the beams.

### Brief description of the drawings

The invention and its many advantages will be described in more detail below with reference to the accompanying schematic drawings, which for the purpose of illustration show some non-limiting embodiments and in which
Fig. 1 shows a perspective of an on-site mobile facility according to the invention,
Fig. 1A shows the on-site mobile facility of Fig. 1 seen from above,
Fig. 2 shows a side view of a module of the on-site mobile facility,
Fig. 3 shows a cross-sectional view of Fig. 2,
Fig. 4 shows four module roof structures mounted into a facility roof structure seen from below,
Fig. 4a shows an enlarged, partial view of Fig. 4,
Fig. 5 shows a folded pyramidal roof structure,
Fig. 6 shows an unfolded pyramidal roof structure,
Fig. 7A shows a hole in the ground,
Fig. 7B shows a base structure arranged in the hole of Fig. 7A, and
Fig. 7C shows the base structure of Fig. 7B from above.

All the figures are highly schematic and not necessarily to scale, and they show only those parts which are necessary in order to elucidate the invention, other parts being omitted or merely suggested.

### Detailed description of the invention

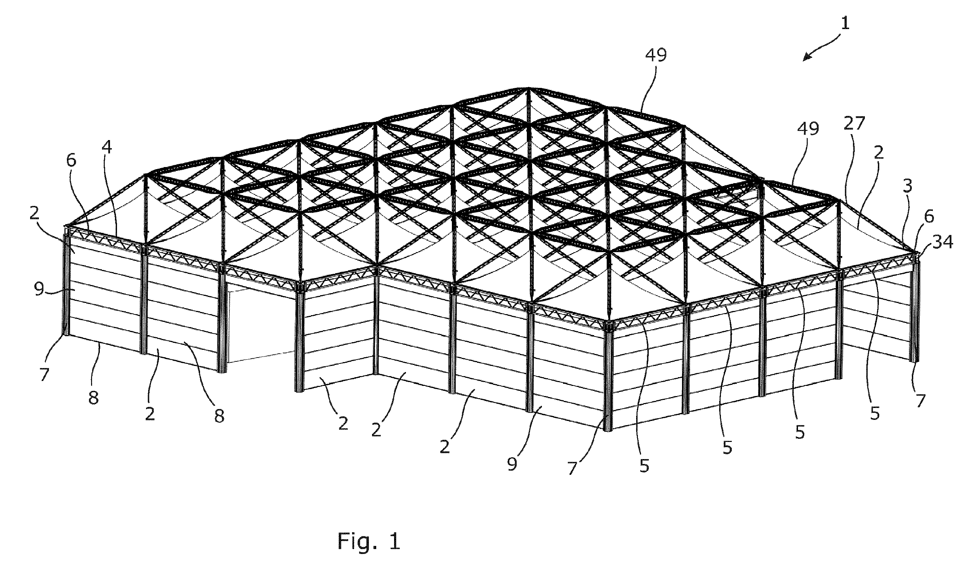

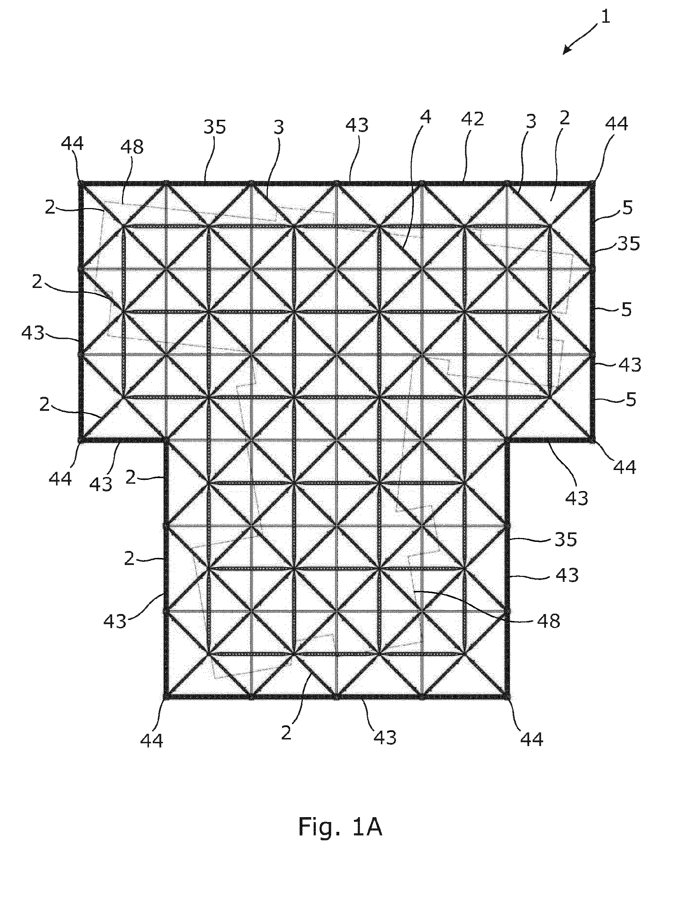

Fig. 1 shows an on-site mobile facility 1 for constructing, renovating or assembling a large element, such as building, a bridge or a wind turbine. In order to provide a production facility when constructing, renovating or assembling such a large element, the on-site mobile facility covers an area large enough for such work to be carried out. As shown in Fig. 1A, the area 42 has boundaries 43 and corners 44, as the facility is primarily built from squares forming a squared grid structure 35. The on-site mobile facility 1 covers a building 48 to be renovated.

The on-site mobile facility 1 comprises a plurality of modules 2 as shown in Figs. 1 and 1A, which, mounted together, form the on-site mobile facility 1. The module roof structures 3 are mounted together, connecting horizontal beams 5 of the module roof structures to form a facility roof structure 4. Each module 2 has a module roof structure 3 which is square when seen from above in Fig. 1A, and as can be seen in Fig. 1, the facility roof structure has edges 6, and the beams 5 defining the edges are supported by legs 7 resting on the ground. The legs 7 and the beams 5 define side areas 8 of each module, and the side areas are covered by a shielding arrangement 9.

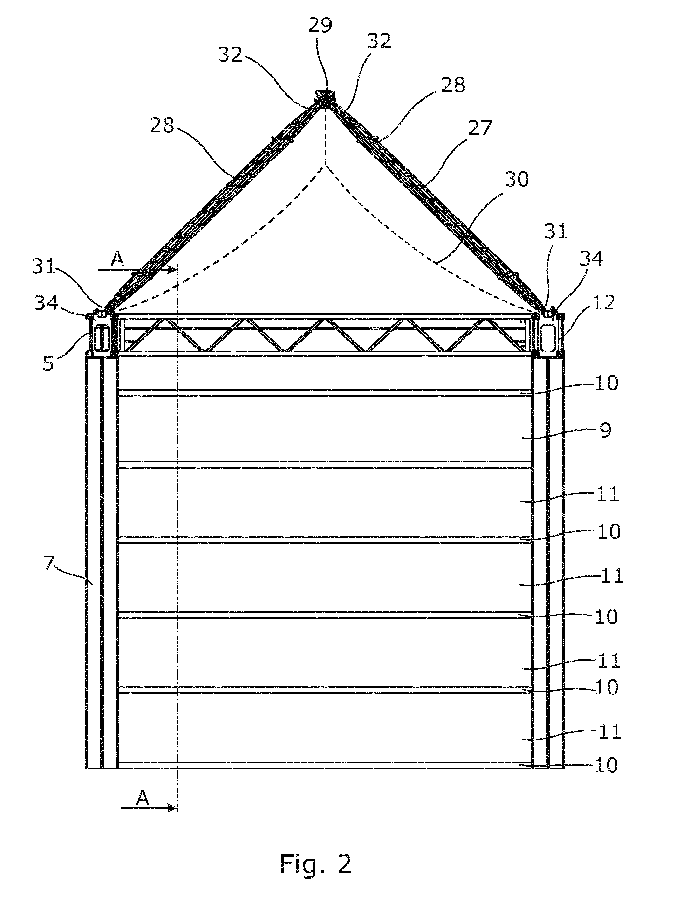

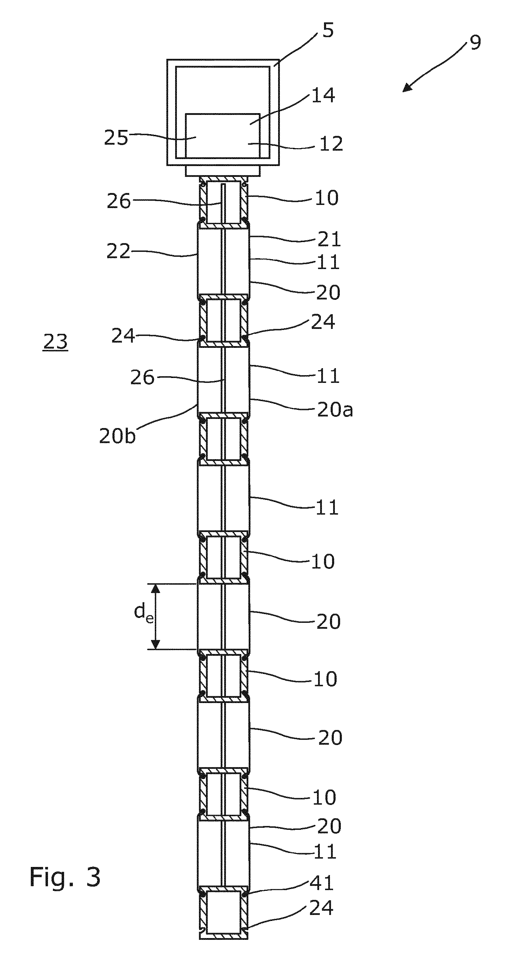

One module of the on-site mobile facility 1 is shown in a frontal view in Fig. 2. As shown in Figs. 2 and 3, the shielding arrangement 9 comprises elongated elements 10, and cover material 11, such as tarpaulin, is arranged between the elements and connected therewith. The on-site mobile facility further comprises a guide system 12 slidably connecting an end of the elements with one of the beams 5 or the adjacent legs 7. In Figs. 1 and 2, the elements are arranged in a slidable arrangement, so that the legs are able to slide up and down and bring the shielding arrangement up or down. In Fig. 1, two side areas are shown with the shielding arrangement up, and the remaining visible side areas are shown with the shielding arrangement down.

The guide system 12 of the on-site mobile facility is slidably connecting the elements with one of the beams 5 or the adjacent legs 7, and no further frame structure is arranged there between. The elements are slidably connected with the beam or legs by a rail connection. The rail connection may be formed by the legs having a groove 18 and the elements having a projection or tongue sliding in the groove, or vice versa. Thus, a very simple facility or construction is obtained which is easy to mount and dismount when the facility is to be used elsewhere or if a storm is coming. The shielding arrangement in each side area can easily be pulled up by a motor of the guiding system 12, as shown in Fig. 3, for bringing the elements from a shielding position to an open position to let the wind through the facility and thus minimise the wind impact on the construction. The motor 14 is fastened to the element furthest away from the beam 5, said element being connected with a hoist system 25 by a hoisting means 26, such as a wireline, a cord or a chain, so that this element and the intermediate elements are hoisted by pulling in the hoisting means, which in Fig. 3 is performed by the motor.

As shown in Fig. 3, the cover material is divided into cover parts 20, each cover part being arranged between two adjacent elements 10. The shielding arrangement 9 has an outer face 21 and an inner face 22 facing an inside 23 of the facility. A first cover part 20a of the cover material is connected to the element at the outer face 21 of the shielding arrangement 9, and a second cover part 20b of the cover material is connected to the element at the inner face of the shielding arrangement 9. Each of the cover parts of the cover material is connected to grooves 24 in the elements 10, each cover part having a side edge 41 matching the groove of the element, so that the cover parts can be fastened in the elements.

In the shielding position shown in Fig. 3, the elements have a first mutual distance dₑ, and when arranged in an open position, the elements have a mutual distance which is smaller than the first mutual distance in the shielding position. If the shielding arrangement is pulled fully upwards, so that the side areas are fully open, the elements 10 abut each other as the motor pulls the lowest element upwards, the other elements being pulled along with it.

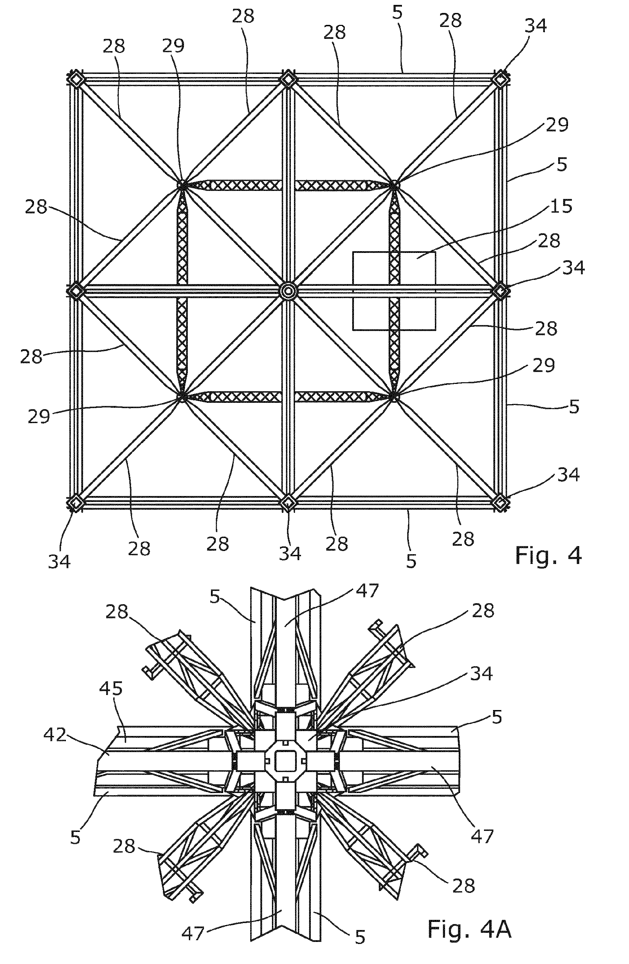

Returning to Fig. 2, each module of the on-site mobile facility comprises a pyramidal roof structure 27 consisting of joists 28 having a first end 31 and a second end 32. The first ends are connected to the beams 5 and the second ends of the joists are connected to each other in a joist connection 29 as seen in Figs. 4 and 4A. The beams are connected by corner blocks 34 forming a squared grid structure 35 as shown in Fig. 1A, and the joists 28 may be connected to the corner blocks 34 instead of directly to the beams as shown in Fig. 4A. The corner block 34 is constructed so that beams 5, legs 7 as well as joists 28 can be mounted thereto.

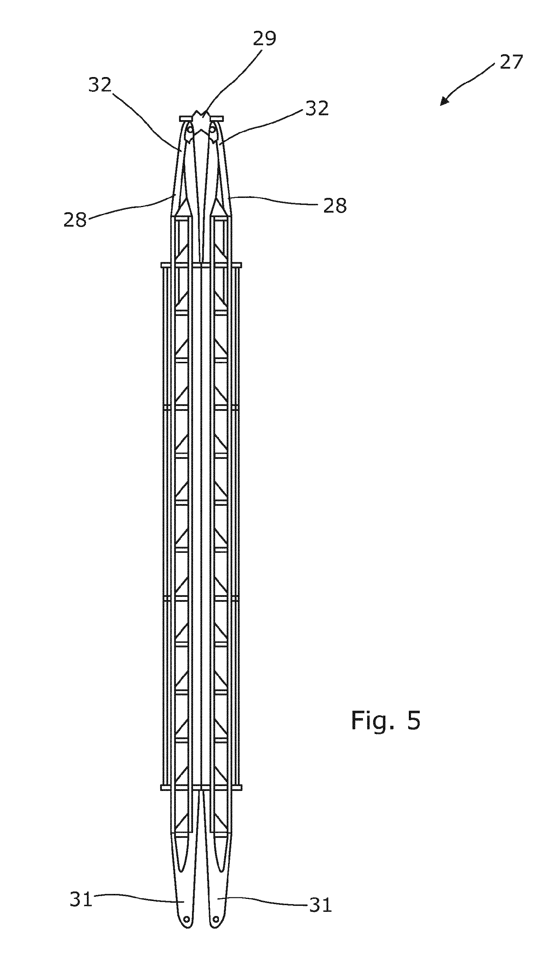

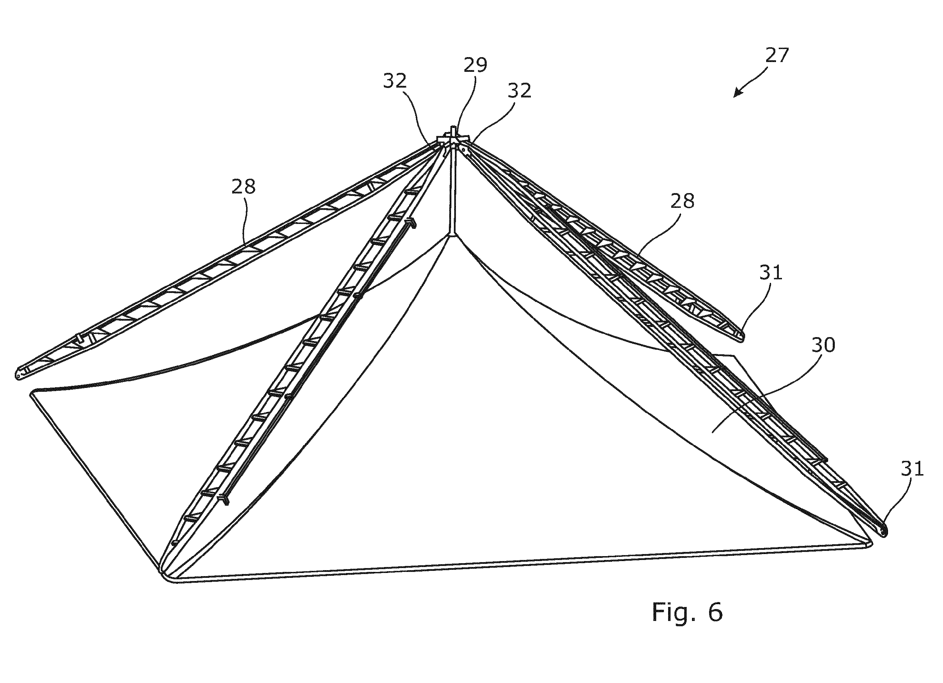

As shown in Fig. 5, the second ends 32 of the joists 28 are hingedly connected in the joist connection 29, so that the pyramidal roof structure is unfoldable as shown in Fig. 6. In Fig. 6, a second cover material 30 is connected with the joist connection and the beams (not shown). The second cover material 30 constitutes the roof of each module so that wind, water, snow and ice are prevented from entering the facility. The second cover material 30 is connected with the beam so that water is flowing along cover material 30 and into a roof gutter 45 (shown in Fig. 4A) which is a part of the beam 5.

The beams 5 and the corner blocks 34 of the on-site mobile facility further comprise projecting structures 47, as shown in Fig. 4A, so that the projecting structures define rails for a crane moving along the rails. Thus, the projecting structures 47 are suspended from the facility roof structure and form part of or are connected with the beams 5. In this way, a crane 15, shown in Fig. 4, is capable of moving along the beams not forming part of the boundaries of the facility roof structure. The projecting flange structures of the beams and the corner blocks may be in the same level of height, so that a crane is capable of travelling across the facility underneath the facility roof structure in a first direction and in a second direction perpendicularly to the first direction. The crane can change direction at the corner block to a direction perpendicular thereto. Furthermore, the rails for the crane may be integrated in the beams and the corner blocks so as to form a grid of rails, so that the crane can travel in two perpendicular directions across the facility underneath the facility roof structure.

The crane 15 may be a traverse crane suspended from the facility roof structure. The aforementioned motor for pulling up the shielding arrangement 9 may be replaced by the crane which could be operating most of the shielding arrangements for moving them between an open and shielding position. Both the motor and the crane may be remotely controlled, so that the facility manager, when hearing of storm or high winds, can send a control signal to the crane and/or motors to bring up the shielding arrangements. The guide system may further comprise a wind sensor 33 and thus be self-operable if excessive winds are measured by the sensor, as the sensor thus sends a signal to the motors and/or crane to pull up the shielding arrangement.

As shown in Fig. 1, the on-site mobile facility 1 may comprise further grid beams 49 connections connecting the joist connections and thus connecting the module roof structures 3 and thus the modules 2, strengthening the stability of the on-site mobile facility 1. The stability of the on-site mobile facility 1 is mainly gained from the corner blocks being rigid and capable of handling a high torque and the crossing in the pyramidal roof structure 27, but the grid beams may also provide some stability to the facility construction.

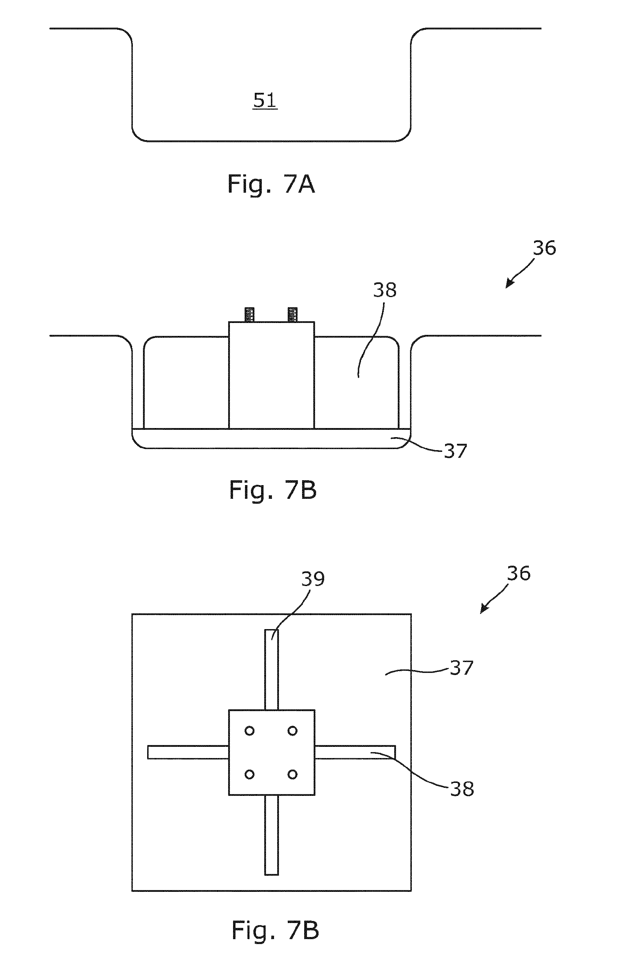

When mounting the on-site mobile facility 1 at a certain location above a building as shown in Fig. 1A, base structures 36, shown in Figs. 7A and 7B, are first firmly fastened to or in the ground, e.g. the base structure is partly submerged into the ground and covered by ground material. Returning to Fig. 1, the legs are then raised by means of a crane, and a leg is fastened by means of a corner block 34 to each of base structures being part of one of the corners 44 of the area 42. Subsequently, two beams are fastened so that a first end of one of the two beams is fastened to one of the legs forming the corner, and a first end of the other of the two beams is fastened to another of the legs forming the corner. Then the second ends of the beams are fastened to each other by means of a corner block, thereby forming a square frame of beams in the corner, so that one corner block is not supported by a leg. Subsequently, the pyramidal roof structure 27 is raised up and fastened to the corner blocks to aid in the support of the "free" and unsupported corner. Subsequently or simultaneously, further legs adjacent the corner are fastened to the base structures and further beams are fastened in a grid frame of beams extending from the first module roof structure, and further pyramidal roof structures are fastened to the beams. By mounting the facility starting with a corner, the facility can be built off the ground, e.g. 30 metres off the ground, covering an existing building. Furthermore, the facility can be mounted with smaller cranes, since the whole facility roof structure does not have to be hoisted in one piece. By using a smaller crane, the facility is less costly to mount than known facilities.

The base structure 36 shown in Fig. 7C comprises a base plate 37 which is substantially horizontal when arranged in a hole 51 (shown in Fig. 7A) in the ground, as shown in Fig. 7B. A first partition 38 is arranged perpendicularly to the base plate in a raised position, and a second partition 39 is connected with the base plate and is arranged perpendicularly to the first partition and perpendicularly to the base plate. The first and second partitions are arranged at least partly in the ground, since after the base structure has been arranged in the hole 51, ground material is filled into the hole on top of the base structure. By having partitions arranged at least partly in the ground, the ground material is divided by the partitions, and when the wind pulls in the facility, the forces acting on the facility are distributed to the base structure and the ground. Consequently, the forces can only move the facility, if the ground material is also moved.

Although the invention has been described in the above in connection with preferred embodiments of the invention, it will be evident for a person skilled in the art that several modifications are conceivable without departing from the invention as defined by the following claims.

## Claims

1. An on-site mobile facility (1) for shielding when constructing, renovating or assembling a building, a bridge or a wind turbine, the on-site mobile facility covering an area having boundaries and corners, comprising:
- a plurality of modules (2), each module having a module roof structure (3), the module roof structures being mounted as a facility roof structure (4) connecting horizontal beams (5) of the module roof structures, the facility roof structure having edges (6) and the horizontal beams defining the edges which are supported by legs (7), the legs and the beams defining side areas (8) which are covered by a shielding arrangement (9), the shielding arrangement comprising elongated elements (10), and cover material (11), such as tarpaulin, being arranged between the elements and connected therewith,
wherein the on-site mobile facility further comprises a guide system (12) slidably connecting the elements with one of the beams or the adjacent legs.

2. An on-site mobile facility according to claim 1, wherein the shielding arrangement has a shielding position in which the elements have a first mutual distance (dₑ) and an open position in which the elements have a smaller mutual distance than the first mutual distance in the shielding position.

3. An on-site mobile facility according to claim 1 or 2, wherein the guide system comprises a motor (14) for bringing the elements from a shielding position to an open position or vice versa.

4. An on-site mobile facility according to claim 1 or 2, further comprising a crane (15), such as a traverse crane, suspended from the facility roof structure.

5. An on-site mobile facility according to any of the preceding claims, wherein the elements are slidably connected with the beam or legs by a rail connection (16).

6. An on-site mobile facility according to any of the preceding claims, wherein the cover material is divided into cover parts (20), each cover part being arranged between two adjacent elements.

7. An on-site mobile facility according to any of the preceding claims, wherein the shielding arrangement has an outer face (21) and an inner face (22) facing an inside (23) of the facility, at least a first cover part of the cover material being connected to the element at the outer face of the shielding arrangement and at least a second cover part of the cover material being connected to the element at the inner face of the shielding arrangement.

8. An on-site mobile facility according to any of the preceding claims, wherein the cover material is connected to grooves (24) in the elements.

9. An on-site mobile facility according to any of the preceding claims, wherein at least the element being furthest away from the beam is connected with a hoist system (25) by a hoisting means (26), such as a wireline, a cord or a chain, so that this element and the intermediate elements are hoisted by pulling in the hoisting means.

10. An on-site mobile facility according to any of the preceding claims, wherein each module comprises a pyramidal roof structure (27) consisting of joists (28) having a first end (31) and a second end (32), the first ends being connected to the beams and the second ends being connected to each other in a joist connection (29).

11. An on-site mobile facility according to claim 10, wherein the second ends of the joists are hingedly connected in the joist connection so that the pyramidal roof structure is unfoldable.

12. An on-site mobile facility according to claim 10 or 11, wherein a second cover material (30) is connected with the joist connection and the beams.

13. An on-site mobile facility according to any of the preceding claims, wherein projecting flanges structures are suspended from the facility roof structure and connected with the beams, the projecting flanges or structure defining rails for a crane moving along the rails.

14. An on-site mobile facility according to any of the preceding claims, wherein the beams are connected by corner blocks (34) forming a squared grid structure (35).

15. A facility mounting method for mounting the on-site mobile facility according to any of the preceding claims at a site and covering an area having boundaries and corners, comprising the steps of:
- arranging a plurality of base structure at predetermined locations at the site along the boundaries,
- fastening a leg to each of the base structures being part of one of the corners,
- raising the beams,
- fastening each beam to the legs by means of corner blocks,
- fastening two beams so that a first end of one of the two beams is fastened to one of the legs forming the corner, and a first end of the other of the two beams is fastened to another one of the legs forming the corner, and fastening second ends of the beams to each other by means of a corner block, thereby forming a square frame of beams in the corner,
- fastening a pyramidal roof structure (27) consisting of joists (28) having a first end (31) and a second end (32), the first ends being connected to the square frame of beams and the second ends of the joists being connected to each other in a joist connection (29),
- fastening further beams to legs adjacent the corner,
- fastening further beams forming square frames of beams, and
- fastening further pyramidal roof structures to the beams.
